# EUROPEAN PATENT APPLICATION

(11) **EP 4 704 199 A1**
(43) Date of publication of application: **04.03.2026**
(21) Application number: 24796845.6
(22) Date of filing: 15.04.2024
(51) Int. Cl.: H01M 10/04, H01M 4/02, H01M 4/13, H01M 10/052, H01M 10/0587

(54) **SECONDARY BATTERY**

(30) Priority: 26.04.2023 JP 2023072198
(71) Applicant: Panasonic Intellectual Property Management Co., Ltd., Kadoma-shi, Osaka 571-0057 (JP)
(72) Inventor: DAVIS, Jerome, Kadoma-shi, Osaka 571-0057 (JP); NATSUMEDA, Syunsuke, Kadoma-shi, Osaka 571-0057 (JP)
(74) Representative: Novagraaf International SA
(86) International application number: PCT/JP2024/014919
(87) International publication number: WO 2024/225089

(57) **Abstract**

A cylindrical battery, which is an example of the embodiment of the present invention, is provided with an electrode body in which a positive electrode (11) that comprises a positive electrode mixture layer (31) and a negative electrode (12) that comprises a negative electrode mixture layer (41) are wound together with a separator being interposed therebetween. A tape (50) for affixing a winding termination end (14x) is adhered to an outer peripheral surface (14s) of the electrode body. An outer peripheral surface (31s) of the positive electrode mixture layer (31) is provided with a recess (35) in a region that overlaps with the tape (50) in the radial direction of the electrode body.

## Description

### TECHNICAL FIELD

The present disclosure relates to a secondary battery, and more particularly to a secondary battery including an electrode assembly having a spiral structure.

### BACKGROUND

Conventionally, a secondary battery having a spiral-type electrode assembly formed by spirally winding a positive electrode and a negative electrode together with an interposed separator is widely known. Generally, a winding fixation tape for maintaining the spiral structure is attached to the outer peripheral surface of the spiral-type electrode assembly (see, for example, Patent Literature 1).

### CITATION LIST

### PATENT LITERATURE

PATENT LITERATURE 1: Japanese Unexamined Patent Application Publication No. 2009-199974

### SUMMARY

In a secondary battery such as a lithium ion battery, a spiral-type electrode assembly expands and contracts during charging and discharging. In cases where a winding fixation tape is attached to the outer peripheral surface of the electrode assembly, stress caused by the expansion of the electrode assembly may concentrate at an edge part of the tape, and the electrode assembly may become damaged. For example, when the volume of the electrode assembly changes as the battery is charged and discharged, stress may concentrate at edge parts of the tape, and wrinkles may occur in the electrode constituting the outer peripheral surface of the electrode assembly.

A secondary battery according to the present disclosure is a secondary battery having an electrode assembly in which an electrode including a mixture layer is wound together with an interposed separator. A tape for fastening a lastly-wound end is attached to an outer peripheral surface of the electrode assembly. In an outer peripheral surface of the mixture layer, a recess is formed in an area that overlaps with the tape in a radial direction of the electrode assembly.

According to the secondary battery according to the present disclosure, stress that may concentrate at an edge part of the winding fixation tape can be alleviated, and occurrence of damage to the electrode assembly can be suppressed.

### BRIEF DESCRIPTION OF DRAWINGS

FIG. 1 is an axial cross-sectional view of a cylindrical battery according to an example embodiment.
FIG. 2 is a perspective view of an electrode assembly according to an example embodiment.
FIG. 3 is a diagram showing a positive electrode and a negative electrode according to an example embodiment.
FIG. 4 is a cross-sectional view taken along line AA in FIG. 3.
FIG. 5 is a diagram showing a modified example of the positive electrode.
FIG. 6 is a diagram showing a modified example of the positive electrode.

### DESCRIPTION OF EMBODIMENTS

Example embodiments of a secondary battery according to the present disclosure will now be described in detail by reference to the drawings. The embodiments described below are merely examples, and the present disclosure is not limited to the following embodiments. Further, configurations obtained by selectively combining the constituent elements of the embodiments described below are included within the scope of the present disclosure.

In the following, as an example embodiment of a secondary battery according to the present disclosure, a cylindrical battery 10 having a bottomed cylindrical outer can 16 will be referred to by way of example. However, the outer casing of the battery is not limited to a cylindrical outer can. A secondary battery according to the present disclosure may be, for example, a rectangular battery having a rectangular outer can, or a pouch-type battery having an outer casing composed of a laminate sheet including a metal layer and a resin layer.

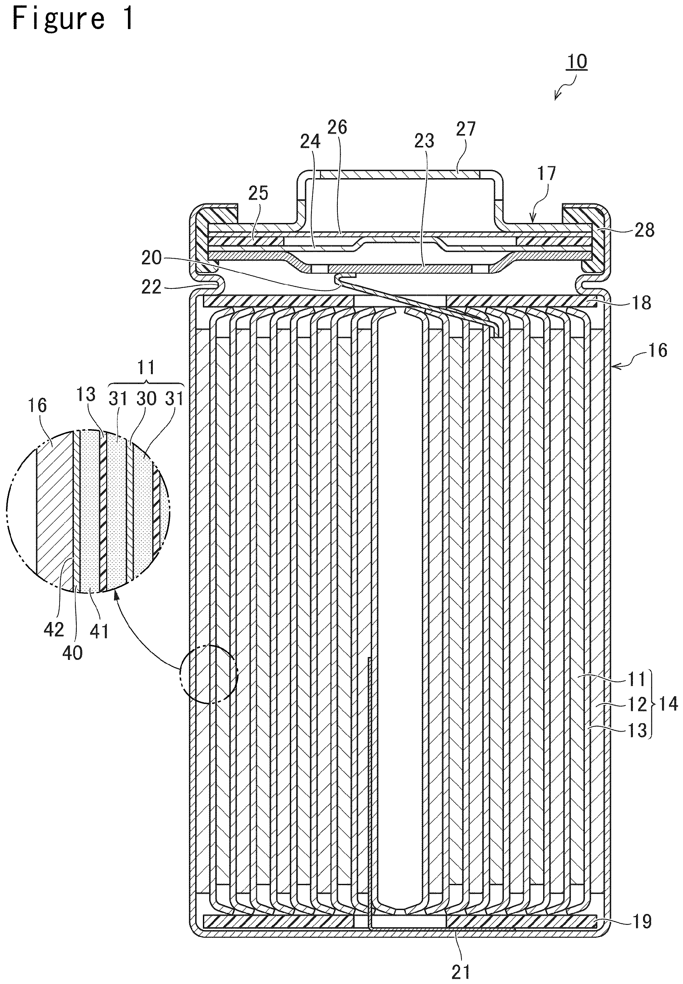

FIG. 1 is a diagram schematically showing an axial cross section of a cylindrical battery 10 according to an example embodiment. In FIG. 1, illustration of a tape 50 is omitted. As shown in FIG. 1, the cylindrical battery 10 comprises an electrode assembly 14 having a spiral structure, an electrolyte, and an outer can 16 that houses the electrode assembly 14 and the electrolyte. The electrode assembly 14 comprises a positive electrode 11, a negative electrode 12, and a separator 13, and has a structure formed by spirally winding the positive electrode 11 and the negative electrode 12 together with the separator 13 interposed. The outer can 16 is a bottomed cylindrical metal container having an opening at one axial end, and the opening of the outer can 16 is closed by a sealing assembly 17. In the following, for convenience of explanation, the side of the battery toward the sealing assembly 17 will be referred to as "upper", and the side toward the bottom of the outer can 16 will be referred to as "lower".

While the electrolyte may be an aqueous electrolyte, a non-aqueous electrolyte is used in the present embodiment. The non-aqueous electrolyte has ionic conductivity. The non-aqueous electrolyte may be either a liquid electrolyte (or electrolyte solution) or a solid electrolyte. For example, the cylindrical battery 10 is a non-aqueous electrolyte secondary battery, and is preferably a lithium ion battery.

The liquid electrolyte (or electrolyte solution) contains a non-aqueous solvent and an electrolyte salt dissolved in the non-aqueous solvent. As the non-aqueous solvent, for example, esters, ethers, nitriles, amides, a mixed solvent containing two or more of the foregoing, and the like are used. Examples of the non-aqueous solvent include ethylene carbonate (EC), ethyl methyl carbonate (EMC), dimethyl carbonate (DMC), diethyl carbonate (DEC), and a mixed solvent containing the foregoing solvents. The non-aqueous solvent may contain a halogen-substituted product (such as fluoroethylene carbonate) obtained by substituting at least part of hydrogen atoms in the above solvents with halogen atoms such as fluorine. As the electrolyte salt, for example, a lithium salt such as LiPF₆ is used.

As the solid electrolyte, for example, a solid or gel polymer electrolyte, an inorganic solid electrolyte, and the like can be used. As the inorganic solid electrolyte, it is possible to use a material known for use in all-solid-state lithium ion secondary batteries and the like (such as an oxide-based solid electrolyte, a sulfide-based solid electrolyte, or a halogen-based solid electrolyte). The polymer electrolyte contains, for example, a lithium salt and a matrix polymer, or alternatively contains a non-aqueous solvent, a lithium salt, and a matrix polymer. As the matrix polymer, for example, a polymer material that absorbs a non-aqueous solvent and forms a gel is used. Examples of the polymer material include fluororesins, acrylic resins, and polyether resins.

The positive electrode 11, the negative electrode 12, and the separator 13, which constitute the electrode assembly 14, are all elongate strip-shaped members, and are alternately laminated in the radial direction of the electrode assembly 14 by being wound in a spiral shape. The negative electrode 12 is formed to have a size slightly larger than the positive electrode 11 in order to prevent lithium deposition. That is, the negative electrode 12 is formed to be longer than the positive electrode 11 in the longitudinal direction and in the width direction (or the shorter direction). The separator 13 is formed to have a size slightly larger than at least the positive electrode 11, and two sheets of the separator are arranged so as to sandwich the positive electrode 11. The cylindrical battery 10 includes insulating plates 18, 19 respectively provided above and below the electrode assembly 14.

The electrode assembly 14 has a positive electrode lead 20 connected to the positive electrode 11 by welding or the like, and a negative electrode lead 21 connected to the negative electrode 12 by welding or the like. In the present embodiment, the positive electrode lead 20 is connected to a longitudinally central part of the positive electrode 11, and the negative electrode lead 21 is connected to a longitudinal end part of the negative electrode 12 located toward the winding center of the electrode assembly 14.

The positive electrode 11 comprises a positive electrode core 30 and a positive electrode mixture layer 31 formed on the positive electrode core 30. As the positive electrode core 30, it is possible to use a foil of a metal such as aluminum or an aluminum alloy that is stable in the potential range of the positive electrode 11, a film having such metal provided on its surface layer, and the like. The positive electrode mixture layer 31 contains a positive electrode active material, a conductive agent, and a binder, and is preferably formed on both sides of the positive electrode core 30 in areas other than the part to which the positive electrode lead 20 is welded. The positive electrode 11 can be produced by, for example, applying a positive electrode mixture slurry containing the positive electrode active material, the conductive agent, the binder, and the like onto the positive electrode core 30, drying the applied coating, and then compressing the coating to thereby form a positive electrode mixture layer 31 on both sides of the positive electrode core 30. An example thickness of the positive electrode mixture layer 31 is greater than or equal to 60 µm and less than or equal to 100 µm on one side of the positive electrode core 30.

The positive electrode mixture layer 31 generally contains, as the positive electrode active material, a lithium metal composite oxide in particulate form. The lithium metal composite oxide is a composite oxide containing a metal element such as Co, Mn, Ni, or Al in addition to Li. The metal element constituting the lithium metal composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from Co, Ni, and Mn is preferably contained. Examples of a suitable composite oxide include a lithium metal composite oxide containing Ni, Co, and Mn, and a lithium metal composite oxide containing Ni, Co, and Al.

The negative electrode 12 comprises a negative electrode core 40 and a negative electrode mixture layer 41 formed on the negative electrode core 40. As the negative electrode core 40, it is possible to use a foil of a metal such as copper or a copper alloy that is stable in the potential range of the negative electrode 12, a film having such metal provided on its surface layer, and the like. The negative electrode mixture layer 41 contains a negative electrode active material, a binder, and, as necessary, a conductive agent, and is preferably formed on both sides of the negative electrode core 40 in areas other than an exposed portion 42 described later and the part to which the negative electrode lead 21 is welded. The negative electrode 12 can be produced by applying a negative electrode mixture slurry containing the negative electrode active material, the binder, and the like onto the surfaces of the negative electrode core 40, drying the applied coating, and then compressing the coating to thereby form a negative electrode mixture layer 41 on both sides of the negative electrode core 40. An example thickness of the negative electrode mixture layer 41 is greater than or equal to 60 µm and less than or equal to 100 µm on one side of the negative electrode core 40.

The negative electrode mixture layer 41 generally contains, as the negative electrode active material, a carbon material that reversibly occludes and releases lithium ions. A suitable example of the carbon material is graphite, such as natural graphite or artificial graphite. As the negative electrode active material, it is also possible to use materials containing at least one of an element such as Si or Sn that forms an alloy with Li, and a material containing such element. Among the foregoing, a composite material containing Si is preferable. A suitable Si-containing composite material is composite particles containing an ion-conducting phase and a Si phase dispersed in the ion-conducting phase. As the negative electrode active material, the carbon material and the Si-containing composite material may be used in combination, which is preferable from the perspective of simultaneously achieving both high capacity and high durability in a battery.

As the separator 13, a porous sheet having ion permeability and insulating property is used. Specific examples of the porous sheet include a microporous thin film, a woven fabric, and a non-woven fabric. As the material of the separator 13, polyolefins such as polyethylene and polypropylene, cellulose, and the like are suitable. The separator 13 may have either a single-layer structure or a multi-layer structure. Further, on the surface of the separator 13, there may be formed a highly heat-resistant resin layer made of aramid resin or the like. A filler layer containing an inorganic filler may be formed at the interface between the separator 13 and at least one of the positive electrode 11 and the negative electrode 12.

At the outer peripheral surface of the electrode assembly 14, the negative electrode 12 is located, and the exposed portion 42 where the surface of the negative electrode core 40 is exposed is formed. The exposed portion 42 may be formed in a part of the outer peripheral surface of the electrode assembly 14, but is preferably formed in the entire area of the outer peripheral surface. The exposed portion 42 may be formed on only one side (or the outward surface) of the negative electrode core 40 facing outward of the electrode assembly 14, or may be formed on both sides of the negative electrode core 40. For example, the exposed portion 42 is formed within the extent of a length of approximately one to two times the circumferential length of the electrode assembly 14 from a longitudinal end part of the negative electrode 12 located at the outer peripheral surface of the electrode assembly 14.

In the cylindrical battery 10, the exposed portion 42 of the negative electrode 12 is in contact with the inner surface of the outer can 16, and the negative electrode lead 21 is connected to the inner surface of the bottom of the outer can 16 by welding or the like. For example, the exposed portion 42 is in contact with the inner surface of the outer can 16 in areas over the entire circumference of the outer peripheral surface of the electrode assembly 14. The positive electrode lead 20 extends through a through hole in the insulating plate 18 and toward the sealing assembly 17, and is connected by welding or the like to the lower surface of an internal terminal plate 23, which is the bottom plate of the sealing assembly 17. Accordingly, in the present embodiment, the sealing assembly 17 serves as the positive electrode external terminal, and the outer can 16 serves as the negative electrode external terminal.

As mentioned above, the outer can 16 is a bottomed cylindrical metal container having an opening at one axial end. A gasket 28 is provided between the outer can 16 and the sealing assembly 17 to ensure airtightness inside the battery and insulation between the outer can 16 and the sealing assembly 17. The outer can 16 has a grooved portion 22 formed thereon, where a part of the side wall projects inward. The grooved portion 22 is preferably formed in an annular shape along the circumferential direction of the outer can 16, and supports the sealing assembly 17 on its upper surface. The sealing assembly 17 is fixed to an upper part of the outer can 16 by means of the grooved portion 22 and an opening end of the outer can 16 which is crimped against the sealing assembly 17.

The sealing assembly 17 has a structure obtained by laminating, in order from the electrode assembly 14 side, the internal terminal plate 23, a lower vent member 24, an insulating member 25, an upper vent member 26, and a cap 27. Each of the members constituting the sealing assembly 17 has, for example, a disk shape or a ring shape, and the respective members except the insulating member 25 are mutually electrically connected. The lower vent member 24 and the upper vent member 26 are connected to each other at their central portions, and the insulating member 25 is interposed between peripheral portions of these vent members. When abnormality occurs in the battery and the internal pressure increases, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

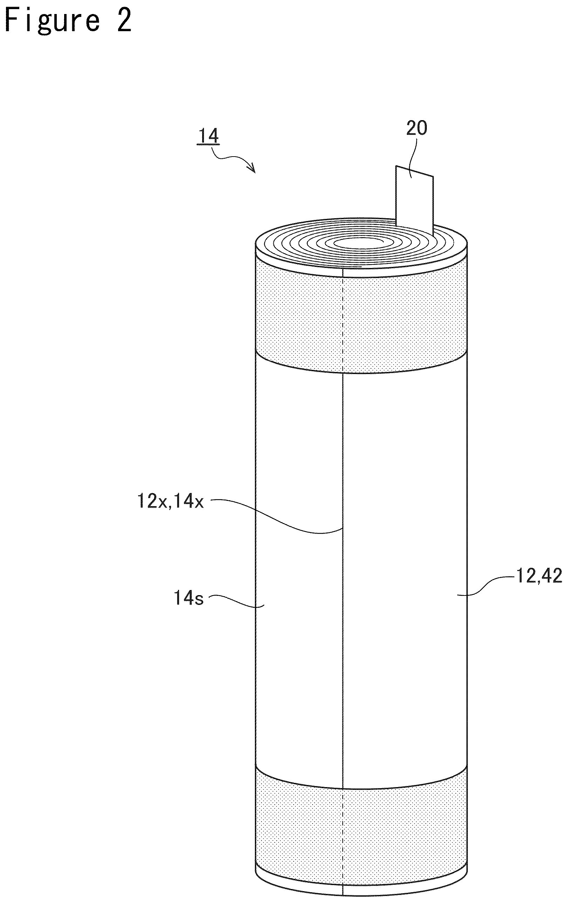

FIG. 2 is a perspective view of the electrode assembly 14. As shown in FIG. 2, tapes 50 are attached to the outer peripheral surface 14s of the electrode assembly 14. Each tape 50 is a winding fixation tape for fastening the lastly-wound end 14x of the electrode assembly 14 and maintaining the spiral structure of the electrode assembly 14. In the present embodiment, the exposed portion 42 of the negative electrode 12 constitutes the outer peripheral surface 14s of the electrode assembly 14, and the lastly-wound side end 12x of the negative electrode 12 serves as the lastly-wound end 14x of the electrode assembly 14. Each tape 50 is attached to the outer peripheral surface 14s of the electrode assembly 14 (or to the exposed portion 42) in a manner straddling across the lastly-wound end 14x, and fastens the lastly-wound end 14x of the outer peripheral surface 14s to a part located on the inner winding side.

Two strip-shaped tapes 50 are attached to the outer peripheral surface 14s of the electrode assembly 14. The two tapes 50 are preferably provided such that their respective longitudinal directions are aligned along the circumferential direction of the electrode assembly 14, and such that the two tapes 50 are spaced apart from each other in the axial direction of the electrode assembly 14. One tape 50 is attached to an upper end part (or one axial end part) of the electrode assembly 14, and the other tape 50 is attached to a lower end part (or the other axial end part) of the electrode assembly 14. In that case, the spiral structure of the electrode assembly 14 is maintained stably. Furthermore, the axial end parts of the electrode assembly 14 are prevented from being pushed against the edge of the outer can 16 and folded over, so that the electrode assembly 14 can be more smoothly placed into the outer can 16.

For example, each tape 50 has a length of greater than or equal to 50 % of the circumferential length of the outer peripheral surface 14s of the electrode assembly 14, and is attached across the lastly-wound end 14x. Since a tape 50 would overlap itself if the length of the tape 50 exceeds 100 % of the circumferential length of the outer peripheral surface 14s, the length is preferably less than or equal to 100 % of the circumferential length of the outer peripheral surface 14s. The lengths of the two tapes 50 may be different from each other, but are substantially the same in the present embodiment.

Each tape 50 has a width equivalent to, for example, greater than 5 % and less than 25 % of the axial length of the electrode assembly 14. The widths of the two tapes 50 may be different from each other, but are substantially the same in the present embodiment. In consideration of attachment errors, the tapes 50 are attached with a predetermined gap (which is, for example, less than or equal to 1 mm) respectively from the upper and lower ends of the outer peripheral surface 14s. The width of each tape 50 is, for example, substantially uniform along its entire length.

Each tape 50 includes a tape substrate and an adhesive layer provided on one side of the tape substrate. For example, the tape 50 is an insulating tape that has substantially no electrical conductivity. The tape substrate is composed of a single-layer or multi-layer resin substrate. The tape 50 may contain an inorganic filler made of titania, alumina, silica, zirconia, or the like, and may separately include, in addition to the tape substrate and the adhesive layer, a layer containing the inorganic filler.

Examples of the resin constituting the tape substrate include polyesters such as polyethylene terephthalate (PET), polypropylene (PP), polyimide (PI), polyphenylene sulfide (PPS), polyetherimide (PEI), and polyamide. The adhesive layer is formed, for example, by applying an adhesive onto one side of the tape substrate.

The adhesive constituting the adhesive layer may be of a hot-melt type that exhibits adhesiveness when heated or of a thermosetting type that hardens when heated, but in terms of productivity and the like, the adhesive preferably has adhesiveness at room temperature. Examples of the adhesive constituting the adhesive layer include an acrylic adhesive and a synthetic rubber adhesive.

The thickness of the tape 50 is, for example, greater than or equal to 15 µm and less than or equal to 90 µm, and preferably greater than or equal to 25 µm and less than or equal to 70 µm. The thickness of the tape substrate is greater than the thickness of the adhesive layer, and is, in one example, greater than or equal to 20 µm and less than or equal to 65 µm. An example thickness of the adhesive layer is greater than or equal to 10 µm and less than or equal to 30 µm.

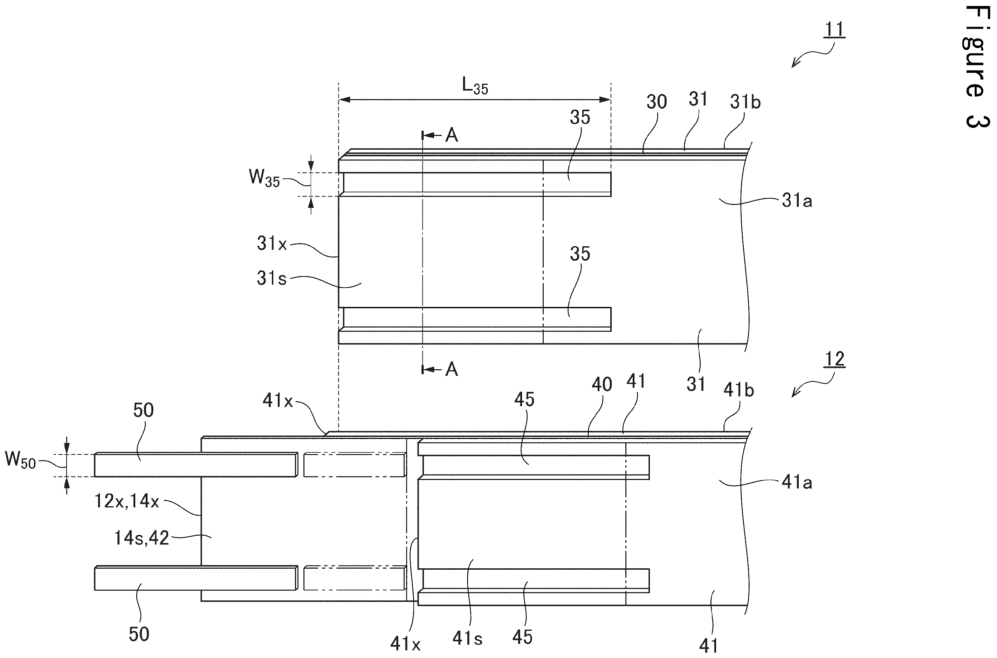

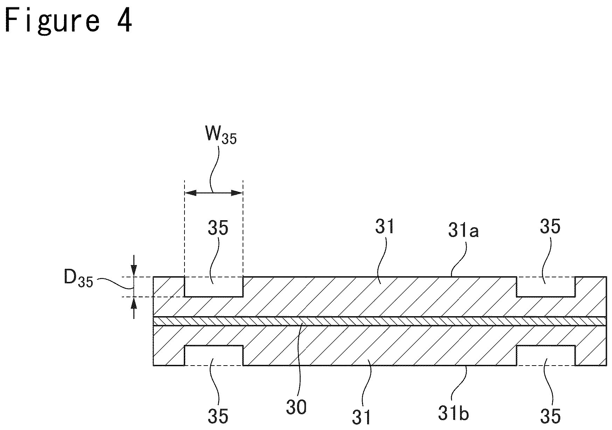

FIG. 3 is a diagram showing the positive electrode 11 and the negative electrode 12 in a developed state, and mainly shows the outward winding surfaces 31a, 41a of the respective electrodes, which face radially outward of the electrode assembly 14. FIG. 4 is a cross-sectional view taken along line AA in FIG. 3. As shown in FIGS. 3 and 4, a recess 35 is formed in the outer peripheral surface 31s of the positive electrode mixture layer 31 in an area that overlaps with a tape 50 in the radial direction of the electrode assembly 14. In addition, a recess 45 is formed in the outer peripheral surface 41s of the negative electrode mixture layer 41 in an area that overlaps with a tape 50 in the radial direction of the electrode assembly 14. Here, the outer peripheral surfaces 31s, 41s of the mixture layers refer to the surfaces located in the radially outermost positions in the outward winding surfaces 31a, 41a facing outward of the electrode assembly 14.

In the present embodiment, the exposed portion 42 of the negative electrode 12 is formed to be slightly longer than the circumferential length of the outer peripheral surface 14s of the electrode assembly 14. Accordingly, the lastly-wound side end 41x of the outward winding surface 41a of the negative electrode mixture layer 41 is located in the second turn of winding from the lastly-wound side end 12x of the negative electrode 12. Meanwhile, the lastly-wound side end 41x of the inward winding surface 41b is located closer to the lastly-wound side end 12x of the negative electrode 12 than is the lastly-wound side end 41x of the outward winding surface 41a. The lastly-wound side end of the positive electrode 11 and the lastly-wound side end 31x of the positive electrode mixture layer 31 are aligned.

As described above, the tapes 50 are attached to the outer peripheral surface 14s of the electrode assembly 14 across the lastly-wound end 14x of the electrode assembly 14, so that when the negative electrode 12 is unrolled, the tapes 50 extend in the longitudinal direction from the lastly-wound side end 12x of the negative electrode 12. In FIG. 3, the areas of the outer peripheral surface 14s to which the portions of the tapes 50 extending from the lastly-wound side end 12x are attached are shown in phantom lines. In the example shown in FIG. 3, the length of the tapes 50 is slightly shorter than the circumferential length of the outer peripheral surface 14s, so that a gap is present between the two longitudinal ends of each tape 50.

The recesses 35, 45 are depressions formed in the respective mixture layers, and the thickness of the mixture layers is decreased in the areas where the recesses 35, 45 are formed. The recesses 35, 45 accommodate the thickness of the tapes 50, and reduce volume changes that occur during charging and discharging in the areas radially overlapping with the tapes 50. With this feature, it is considered that stress that acts on edge parts of the tapes 50 is alleviated, and that occurrence of damage to the electrode assembly 14 is effectively suppressed. As will be described in more detail later, it is preferable that the recesses 35, 45 are slightly larger than the areas that overlap with the tapes 50 in the radial direction of the electrode assembly 14.

The recesses 35, 45 may additionally be formed in areas of the outward winding surfaces 31a, 41a of the respective mixture layers other than the outer peripheral surfaces 31s, 41s, and may also be formed in the inward winding surfaces 31b, 41b. In the present embodiment, each recess 35 is slightly longer than the circumferential length of the outer peripheral surface 31s, and is formed from the lastly-wound side end 31x to extend beyond the outer peripheral surface 31s and into the second turn of winding. Similarly, each recess 45 is slightly longer than the circumferential length of the outer peripheral surface 41s, and is formed from the lastly-wound side end 41x to extend beyond the outer peripheral surface 41s into the second turn of winding. Further, a recess 35 is also formed in the inward winding surface 31b of the positive electrode mixture layer 31.

In cases where a recess 45 is formed in the outward winding surface 41a of the negative electrode mixture layer 41, it is preferable that a recess 35 is also formed in the inward winding surface 31b of the positive electrode mixture layer 31 that is located facing the recess 45 across the separator 13. The recess 35 in the inward winding surface 31b is formed from the perspective of suppressing lithium deposition, rather than from the perspective of suppressing occurrence of damage to the electrode assembly 14. In the examples shown in FIGS. 3 and 4, recesses 35 are formed in both the outward winding surface 31a and the inward winding surface 31b of the positive electrode mixture layer 31. The recesses 35 in the respective surfaces are formed so as to overlap each other in the thickness direction of the positive electrode 11.

Each recess 35 is preferably formed with a depth D₃₅ that is greater than or equal to the thickness of the tape 50. In that case, the thickness of the tape 50 can be easily accommodated, and suppression of damage to the electrode assembly 14 is enhanced. In the present embodiment, the depth, width, length, and the like of the recess 45 are similar to those of the recess 35, so that features common to the recesses 35 and 45 will be described below by referring to the recess 35 as an example. The depth D₃₅ of the recess 35 is greater than or equal to the thickness of the tape 50 and less than or equal to the thickness D₃₁ of the positive electrode mixture layer 31, and is preferably greater than or equal to 1.0 times and less than or equal to 1.2 times the thickness of the tape 50. A suitable example of the depth D₃₅ is greater than or equal to 30 µm and less than or equal to 80 µm.

The thickness of the positive electrode mixture layer 31 is smaller at the bottom of the recess 35 than in other areas (hereinafter referred to as the "first region") of the positive electrode mixture layer 31 where the recess 35 is not formed. Hereinafter, the thin region formed at the bottom of the recess 35 will be referred to as the "second region" of the positive electrode mixture layer 31. In the present embodiment, the second region is formed only in the outer peripheral surface 31s (or the first turn of winding) of the positive electrode mixture layer 31 and in part of the second turn of winding of the positive electrode mixture layer 31 adjacent to the outer peripheral surface 31s, while all other areas are the first region. The second region formed at the bottom of the recess 35 has substantially the same density as the first region.

The density of the positive electrode mixture layer 31 is substantially uniform throughout its entire area, and is, in one example, greater than or equal to 3.3 g/cc and less than or equal to 4.0 g/cc. Further, the adhesive strength of the second region to the positive electrode core 30 is substantially the same as the adhesive strength of the first region. The adhesive strength of the positive electrode mixture layer 31 to the positive electrode core 30 can be evaluated by peel strength. Accordingly, it can be said that the peel strength of the positive electrode mixture layer 31 is substantially uniform over its entire area.

The recesses 35 are formed in the positive electrode mixture layer 31 at positions toward both ends in the width direction rather than at the center in the width direction. That is, the recesses 35 are formed at two locations in the positive electrode mixture layer 31 that are spaced apart from each other in the width direction. In other words, the first region of the positive electrode mixture layer 31 is formed between two recesses 35. The tapes 50 are attached to both axial end parts of the electrode assembly 14, and the central part of the positive electrode mixture layer 31 in the width direction is an area that does not overlap with the tapes 50. Accordingly, by forming this area as the first region, capacity reduction can be kept to the minimum required. In the present embodiment, the first region is additionally formed between each of the recesses 35 and either of the two widthwise ends of the positive electrode mixture layer 31.

Each recess 35 is preferably formed in the shape of a groove extending in the longitudinal direction of the positive electrode 11. The two recesses 35 are arranged parallel to each other and have substantially the same length L₃₅, the same width W₃₅, and the same depth D₃₅. In the present embodiment, since there is an area in a central part, in the circumferential direction, of the outer peripheral surface 14s of the electrode assembly 14 where the tapes 50 are not attached, each recess 35 may be split apart in the longitudinal direction of the positive electrode 11. However, in consideration of misalignment with the tape 50 or the like, the recess 35 is preferably formed continuously. The recess 35 is formed continuously across the extent of the outer peripheral surface 31s from the lastly-wound side end 31x to the longitudinal end part on the firstly-wound side. The length L₃₅ of the recess 35 is greater than the length of the tape 50, and in a suitable example, is greater than or equal to 1.1 times and less than or equal to 1.5 times the length of the tape 50.

The width W₃₅ of the recess 35 is preferably greater than the width W₅₀ of the tape 50. In consideration of misalignment with the tape 50, the width W₃₅ of the recess 35 is set to, for example, greater than or equal to 1.1 times the width W₅₀ of the tape 50. An example of the upper limit of the width W₃₅ of the recess 35 is 1.2 times the width W₅₀ of the tape 50. By forming the recess 35 in the minimum area required, occurrence of damage to the electrode assembly 14 can be efficiently suppressed while ensuring high capacity. The recess 35 has a uniform width and depth over its entire length.

No particular limitation is imposed on the method for forming the recess 35, and one example is a method including applying a positive electrode mixture slurry onto a positive electrode core 30 to form a positive electrode mixture layer 31 with a uniform thickness, and then removing a part of the positive electrode mixture layer 31. For example, the positive electrode mixture layer 31 can be removed by laser ablation. Laser ablation is a processing technique in which a target object is irradiated with high-power laser light, and the constituent material is melted and sublimated to thereby be removed. The recess 35 can be formed by irradiating a desired site at the surface of the positive electrode mixture layer 31 with high-power laser light and thereby removing a part of the positive electrode mixture layer 31.

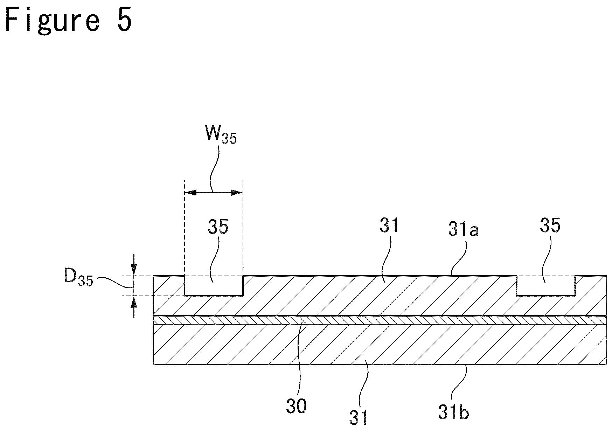

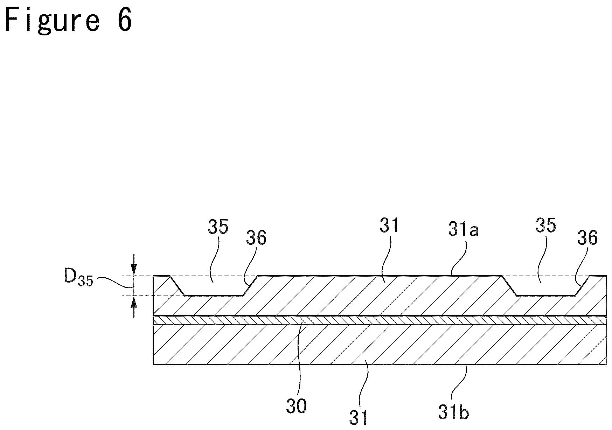

FIGS. 5 and 6 are cross-sectional views showing modified examples of the positive electrode 11. As shown in FIG. 5, the recesses 35 may be formed only in the outward winding surface 31a of the positive electrode mixture layer 31. When the recesses 35 are formed in the outward winding surface 31a, and particularly in the outer peripheral surface 31s, suppression of damage to the electrode assembly 14 becomes more notable. Since the capacity would be decreased if the area in which the recesses 35 are formed is made too large, forming the recesses 35 only in the outward winding surface 31a is preferable from the perspective of efficiently suppressing occurrence of damage to the electrode assembly 14 while ensuring high capacity. The recesses 35 may be formed only in the outer peripheral surface 31s of the positive electrode mixture layer 31.

In cases where the recesses 35 are formed only in the outward winding surface 31a of the positive electrode mixture layer 31, it is preferable not to form the recesses 45 in the negative electrode mixture layer 41 from the perspective of suppressing lithium deposition. As described above, each recess 45 is formed in a pair with a recess 35 in the inward winding surface 31b of the positive electrode mixture layer 31. Further, in cases where the electrode assembly 14 has both the recesses 35 and 45, the recesses 45 may be formed shallower than the recesses 35. In that case, the depth of the recesses 35 may be different between the outward winding surface 31a and the inward winding surface 31b, and the depth of the recesses 35 in the outward winding surface 31a may be greater than the depth of the recesses 35 in the inward winding surface 31b.

As shown in FIG. 6, each recess 35 may be formed in a tapered shape in which the groove width gradually narrows toward the bottom of the recess 35 (or groove bottom). In the examples shown in FIGS. 4 and 5, the groove walls of each recess 35 along the longitudinal direction are formed to be approximately perpendicular to the surface of the positive electrode core 30, but in the example shown in FIG. 6, the groove walls are formed as inclined surfaces 36 that are inclined at a predetermined angle to the direction normal to the surface of the positive electrode core 30. The predetermined angle is, for example, greater than or equal to 30° and less than or equal to 70°. By forming the recess 35 in a tapered shape, the tape 50 can be easily introduced into the recess 35 so that alignment is facilitated, and suppression of occurrence of damage to the electrode assembly 14 is enhanced.

In each recess 35, an inclined surface 36 may be formed on only one widthwise side of the recess 35, but is preferably formed on both sides in the width direction. The groove bottom of the recess 35 is formed flat along the surface of the positive electrode core 30, and the distance between the inclined surfaces 36, which is along the width direction of the positive electrode mixture layer 31, is set to be greater than or equal to the width W₅₀ of the tape 50.

As explained above, according to the cylindrical battery 10 having the above-described configuration, it is considered that stress that may concentrate at edge parts of the winding fixation tapes 50 can be alleviated, and occurrence of damage to the electrode assembly 14 can be effectively suppressed. In cases where the tapes 50 are attached to the outer peripheral surface 14s of the electrode assembly 14, stress is likely to concentrate at edge parts of the tapes 50 when the volume of the electrode assembly 14 changes as the battery is charged and discharged, and in conventional secondary batteries, for example, wrinkles may occur in the electrode constituting the outer peripheral surface 14s. In the cylindrical battery 10, wrinkles are less likely to occur in the electrode, and occurrence of damage to the electrode assembly 14 is sufficiently suppressed.

The above-described embodiment can be modified in design as appropriate so long as the object of the present disclosure is not impaired. For example, although the outer peripheral surface 14s of the electrode assembly 14 is composed of the exposed portion 42 of the negative electrode 12 in the above embodiment, the outer peripheral surface 14s may alternatively be composed of the separator 13.

The present disclosure is further illustrated by the following embodiments.

Configuration 1: A secondary battery, comprising an electrode assembly in which an electrode including a mixture layer is wound together with an interposed separator, wherein a tape for fastening a lastly-wound end is attached to an outer peripheral surface of the electrode assembly, and in an outer peripheral surface of the mixture layer, a recess is formed in an area that overlaps with the tape in a radial direction of the electrode assembly.

Configuration 2: A secondary battery according to Configuration 1, wherein the recess is formed with a depth that is greater than or equal to a thickness of the tape.

Configuration 3: A secondary battery according to Configuration 1 or 2, wherein the recess is a groove extending in a longitudinal direction of the electrode, and is formed in a tapered shape in which a groove width gradually narrows toward a groove bottom.

Configuration 4: A secondary battery according to any one of Configurations 1 to 3, wherein the mixture layer formed at a bottom of the recess has a density substantially identical to that of the mixture layer formed in areas other than the recess.

Configuration 5: A secondary battery according to any one of Configurations 1 to 4, wherein the electrode comprises a positive electrode including a positive electrode mixture layer and a negative electrode including a negative electrode mixture layer, and the recess is formed in at least the positive electrode mixture layer.

### REFERENCE SIGNS LIST

10 cylindrical battery; 11 positive electrode; 12 negative electrode; 12x lastly-wound side end; 13 separator; 14 electrode assembly; 14s outer peripheral surface; 14x lastly-wound end; 16 outer can; 17 sealing assembly; 18, 19 insulating plate; 20 positive electrode lead; 21 negative electrode lead; 22 grooved portion; 23 internal terminal plate; 24 lower vent member; 25 insulating member; 26 upper vent member; 27 cap; 28 gasket; 30 positive electrode core; 31 positive electrode mixture layer; 31a outward winding surface; 31b inward winding surface; 31s outer peripheral surface; 31x lastly-wound side end; 35 recess; 36 inclined surface; 40 negative electrode core; 41 negative electrode mixture layer; 41a outward winding surface; 41b inward winding surface; 41s outer peripheral surface; 41x lastly-wound side end; 42 exposed portion; 45 recess; 50 tape

## Claims

1. A secondary battery, comprising an electrode assembly in which an electrode including a mixture layer is wound together with an interposed separator, wherein
a tape for fastening a lastly-wound end is attached to an outer peripheral surface of the electrode assembly, and
in an outer peripheral surface of the mixture layer, a recess is formed in an area that overlaps with the tape in a radial direction of the electrode assembly.

2. A secondary battery according to claim 1, wherein the recess is formed with a depth that is greater than or equal to a thickness of the tape.

3. A secondary battery according to claim 1, wherein the recess is a groove extending in a longitudinal direction of the electrode, and is formed in a tapered shape in which a groove width gradually narrows toward a groove bottom.

4. A secondary battery according to claim 1, wherein the mixture layer formed at a bottom of the recess has a density substantially identical to that of the mixture layer formed in areas other than the recess.

5. A secondary battery according to any one of claims 1 to 4, wherein
the electrode comprises a positive electrode including a positive electrode mixture layer and a negative electrode including a negative electrode mixture layer, and
the recess is formed in at least the positive electrode mixture layer.
